# EUROPEAN PATENT APPLICATION

(11) **EP 4 407 259 A1**
(43) Date of publication of application: **31.07.2024**
(21) Application number: 21962438.4
(22) Date of filing: 28.10.2021
(51) Int. Cl.: F25D 11/00, F25D 19/00

(54) **TRANSPORT REFRIGERATOR UNIT**

(71) Applicant: MITSUBISHI HEAVY INDUSTRIES THERMAL SYSTEMS, LTD., Tokyo 100-8332 (JP)
(72) Inventor: DHARAMSHI Kewal, Tokyo 100-8332 (JP); JINNO Hiroki, Tokyo 100-8332 (JP); PIAO Hailong, Tokyo 100-8332 (JP); MATSUMOTO Kyohei, Tokyo 100-8332 (JP)
(74) Representative: Cabinet Beau de Loménie
(86) International application number: PCT/JP2021/039916
(87) International publication number: WO 2023/073892

(57) **Abstract**

This transport refrigerator unit comprises a casing having a rear plate that can be attached to a trailer and a bottom plate that extends forward from the bottom end of the rear plate and can be attached to the trailer, the casing having an interior in which various devices can be stored. The casing is formed with an opening extending across the rear plate and the bottom plate, the opening providing communication between the inside and outside of the casing and allowing piping and/or wiring to be drawn out. The opening has a rear opening on the rear plate side, and a bottom opening on the bottom plate side, connected to the bottom end of the rear opening.

## Description

### Technical Field

The present disclosure relates to a transport refrigeration unit.

### Background Art

PTL 1 discloses a condenser unit for a transport refrigeration device that can be attached to a front wall or a roof of a vehicle.

### Citation List

### Patent Literature

[PTL 1] Japanese Unexamined Patent Application Publication No. H06-265256

### Summary of Invention

### Technical Problem

However, in the condenser unit described in PTL 1, a posture of the condenser unit is always different between a case where the condenser unit is attached to the front wall and a case where the condenser unit is attached to the roof, and attachment postures are restricted. Therefore, there is a room for improvement in terms of improvement in degree of freedom in attachment.

The present disclosure has been made to solve the above problems, and an object thereof is to provide a transport refrigeration unit capable of improving a degree of freedom in attachment.

### Solution to Problem

In order to solve the above problems, a transport refrigeration unit according to the present disclosure includes a casing that includes a back plate attachable to a trailer, and a lower plate extending forward from a lower end of the back plate and attachable to the trailer, and that is capable of storing various devices therein, in which an opening provided across the back plate and the lower plate is formed in the casing, and the opening allows an inside and an outside of the casing to communicate with each other and allows at least one of a pipe and a wire to be drawn out of the casing, and the opening includes a back opening located on a back plate side and a lower opening located on a lower plate side and connected to a lower end of the back opening.

### Advantageous Effects of Invention

According to the transport refrigeration unit of the present disclosure, the degree of freedom in attachment can be improved.

### Brief Description of Drawings

Fig. 1 is a perspective view showing a schematic configuration of a refrigerated vehicle including a transport refrigeration unit according to an embodiment of the present disclosure.
Fig. 2 is a perspective view of a refrigeration unit body according to the embodiment of the present disclosure.
Fig. 3 is a view of the interior of an indoor unit and the refrigeration unit body according to the embodiment of the present disclosure as seen from above.
Fig. 4 is a perspective view of the refrigeration unit body according to the embodiment of the present disclosure as seen from below.
Fig. 5 is a perspective view showing a state in which a back opening according to the embodiment of the present disclosure is closed by a decorative board.
Fig. 6 is a schematic view showing a case where a casing of the refrigeration unit body according to the embodiment of the present disclosure is attached to a ceiling wall of a trailer body.
Fig. 7 is a perspective view showing a state in which a lower opening according to the embodiment of the present disclosure is closed by the decorative board. Description of Embodiments

### (Refrigerated vehicle)

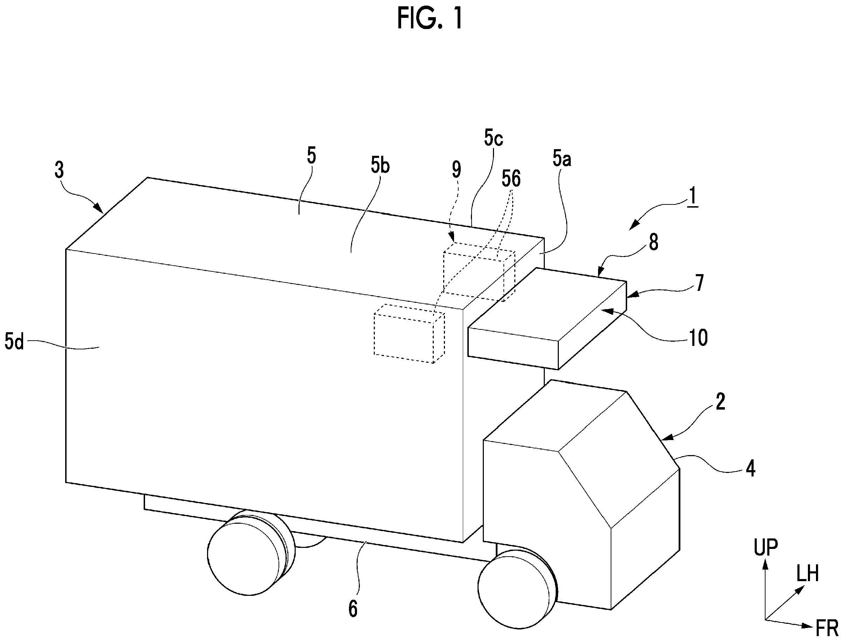

Hereinafter, a refrigerated vehicle 1 according to an embodiment of the present disclosure will be described with reference to Figs. 1 to 6.

As shown in Fig. 1, the refrigerated vehicle 1 includes a tractor 2, a trailer 3, and a transport refrigeration unit 7.

Hereinafter, a vertical up-down direction will be simply referred to as an "up-down direction", one of directions perpendicular to the up-down direction will be referred to as a "front-rear direction", and a direction perpendicular to the up-down direction and the front-rear direction will be referred to as a "left-right direction". A running direction of the refrigerated vehicle 1 coincides with the front-rear direction. The front, the rear, the left, and the right are defined with reference to a driver's seat of the refrigerated vehicle 1.

The tractor 2 includes a cab 4 serving as the driver's seat and runs by means of a running engine (not shown). The tractor 2 tows the trailer 3.

The trailer 3 includes a trailer body 5 and a chassis 6.

The trailer body 5 is a box-shaped container supported from below by the chassis 6. The trailer body 5 extends in the front-rear direction. A space for accommodating a cargo (not shown) is formed inside the trailer body 5.

The trailer body 5 has a front wall 5a disposed on the tractor 2 side, a ceiling wall 5b connected to an upper end of the front wall 5a, a left wall 5c connected to a left end of the front wall 5a and a left end of the ceiling wall 5b, and a right wall 5d connected to a right end of the front wall 5a and a right end of the ceiling wall 5b.

### (Transport Refrigeration Unit)

The transport refrigeration unit 7 has a refrigeration unit body 8 and an indoor unit 9.

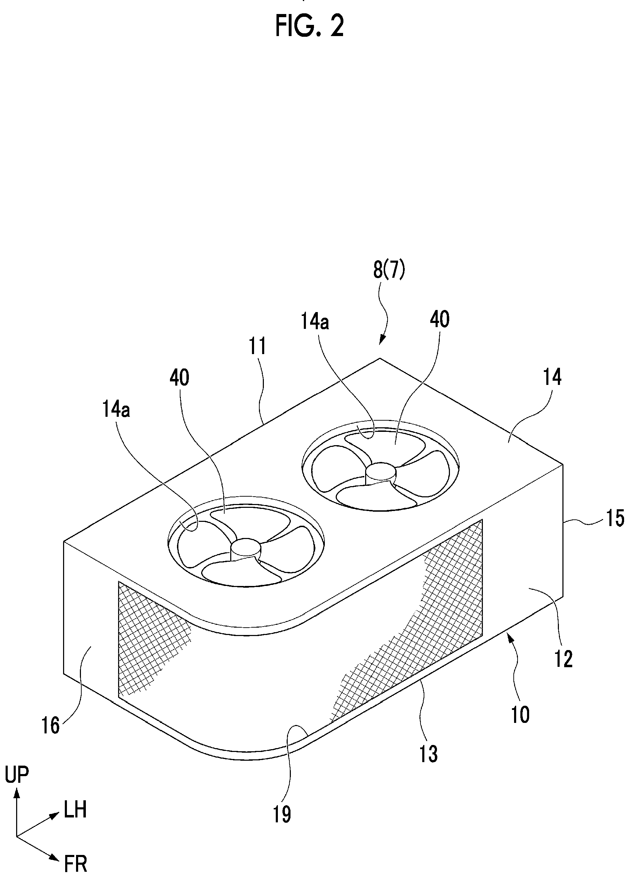

The refrigeration unit body 8 is disposed outside the trailer body 5. The refrigeration unit body 8 is fixed to an upper portion of a front surface of the front wall 5a of the trailer body 5. As shown in Figs. 2 to 5, the refrigeration unit body 8 includes a casing 10, an accumulator 53, a compressor 51, a fan 40, an outdoor heat exchanger 52, a receiver 54, an electrical component box 20, and a decorative board 83. A space for accommodating devices configuring the refrigeration unit body 8 is formed inside the casing 10.

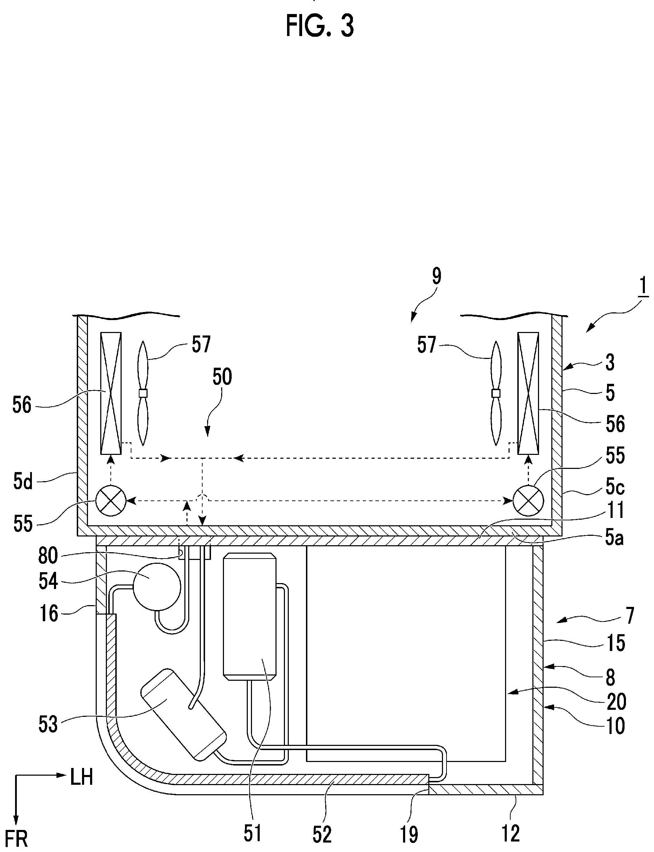

As shown in Fig. 3, the indoor unit 9 includes an expansion valve 55, an indoor heat exchanger 56, and an indoor fan 57.

A cooling cycle 50 of the transport refrigeration unit 7 is configured by the accumulator 53, the compressor 51, the outdoor heat exchanger 52, the receiver 54, the expansion valve 55, the indoor heat exchanger 56, the indoor fan 57, and the like.

The accumulator 53 is accommodated in the casing 10. The accumulator 53 is connected to the indoor heat exchanger 56 in a state in which the accumulator 53 is capable of receiving a refrigerant passing through the indoor heat exchanger 56.

The compressor 51 is accommodated in the casing 10 and is connected to the accumulator 53. The compressor 51 compresses a gas-phase refrigerant supplied from the accumulator 53.

The fan 40 is accommodated in the casing 10. The fan 40 takes air into the casing 10 and discharges the air in the casing 10 to the outside.

The outdoor heat exchanger 52 is accommodated in the casing 10. The outdoor heat exchanger 52 is connected to the compressor 51 in a state in which the outdoor heat exchanger 52 is capable of receiving the refrigerant compressed by the compressor 51. The outdoor heat exchanger 52 is a condenser that cools and condenses the gas-phase refrigerant supplied from the compressor 51 by using the outside air taken into the casing 10 by the fan 40. The gas-phase refrigerant supplied from the compressor 51 is changed to a liquid-phase refrigerant by the outdoor heat exchanger 52. The outdoor heat exchanger 52 is connected to the receiver 54 in a state in which the cooled refrigerant can be supplied to the receiver 54.

The receiver 54 is accommodated in the casing 10. The receiver 54 temporarily stores the liquid-phase refrigerant supplied from the outdoor heat exchanger 52, and absorbs a fluctuation in flow rate of the refrigerant in the cooling cycle 50. The receiver 54 is connected to the expansion valve 55 in a state in which the stored liquid-phase refrigerant can be supplied.

The expansion valve 55 is accommodated in the trailer body 5. The expansion valve 55 is provided one by one on the left side and the right side in the trailer body 5. The two expansion valves 55 are disposed at positions symmetrical when viewed from above, and have the same configuration. Hereinafter, the left expansion valve 55 of the two expansion valves 55 will be described, and the right expansion valve 55 will not be described.

The expansion valve 55 is disposed in an upper portion (a portion close to the ceiling wall 5b) of a corner formed by the left wall 5c and the front wall 5a. The expansion valve 55 expands (decompresses) the liquid-phase refrigerant supplied from the receiver 54. The expansion valve 55 is connected to the indoor heat exchanger 56 in a state in which the expanded liquid-phase refrigerant can be supplied to the indoor heat exchanger 56.

The indoor heat exchanger 56 is accommodated in the trailer body 5. The indoor heat exchanger 56 is provided one by one on the left side and the right side in the trailer body 5. The two indoor heat exchangers 56 are disposed at positions symmetrical when viewed from above, and have the same configuration. Hereinafter, the indoor heat exchanger 56 on the left side of the two indoor heat exchangers 56 will be described, and the indoor heat exchanger 56 on the right side will not be described.

The indoor heat exchanger 56 is disposed near the expansion valve 55. The indoor heat exchanger 56 is an evaporator that exchanges heat between the air around the indoor heat exchanger 56 and the liquid-phase refrigerant supplied from the expansion valve 55 to evaporate the liquid-phase refrigerant. The gas-phase refrigerant supplied from the expansion valve 55 is changed to the liquid-phase refrigerant by the indoor heat exchanger 56. At this time, heat of the air around the indoor heat exchanger 56 is absorbed to the refrigerant. In this way, the air around the indoor heat exchanger 56 is cooled.

The indoor fan 57 is accommodated in the trailer body 5. The indoor fan 57 is provided one by one on the left side and the right side in the trailer body 5. The two indoor fans 57 are disposed at positions symmetrical when viewed from above, and have the same configuration. Hereinafter, the indoor fan 57 on the left side of the two indoor fans 57 will be described, and the indoor fan 57 on the right side will not be described.

The indoor fan 57 is disposed near the indoor heat exchanger 56. The indoor fan 57 circulates the air cooled by the indoor heat exchanger 56 inside the trailer body 5 to cool the inside of the trailer body 5.

### (Details of Refrigeration Unit Body)

Hereinafter, details of the refrigeration unit body 8 will be described with reference to Figs. 2 to 5.

### (Casing)

As shown in Figs. 2 to 4, the casing 10 is formed in a cubic shape. The casing 10 includes a back plate 11 that is attachable to the trailer 3, a front plate 12 disposed to face the back plate 11 from the front, a lower plate 13 connected to lower ends of the back plate 11 and the front plate 12 and attachable to the trailer 3 in the same manner as the back plate 11, an upper plate 14 connected to an upper end of the front plate 12 of the back plate 11, and a left plate 15 and a right plate 16 that are disposed to face each other in the left-right direction and are connected to the back plate 11, the front plate 12, the lower plate 13, and the upper plate 14.

The casing 10 is formed to be thin in the up-down direction. The casing 10 is formed such that a height in the up-down direction is, for example, a ratio of 50% or less with respect to a width in the left-right direction and a depth in the front-rear direction.

In the present embodiment, the back plate 11 is attached and fixed to the front surface of the front wall 5a of the trailer body 5.

The lower plate 13 extends forward from the lower end of the back plate 11. A plate thickness direction of the lower plate 13 coincides with the up-down direction. The lower plate 13 is formed integrally with the back plate 11 and is formed in an L-shape together with the back plate 11 when viewed from the left-right direction. The lower plate 13 functions as a main frame that supports an accommodated object in the casing 10 together with the back plate 11.

A plate thickness direction of the upper plate 14 coincides with the up-down direction. The upper plate 14 is provided with two discharge ports 14a penetrating the upper plate 14 and discharging the air from the inside to the outside of the casing 10. The two discharge ports 14a are provided on the left side and the right side of the upper plate 14. The discharge port 14a penetrates the upper plate 14 in the up-down direction. The discharge port 14a is formed in a circular shape when viewed from the up-down direction.

The front plate 12 and the right plate 16 are provided with a suction port 19 through which the air outside the casing 10 is introduced into the casing 10. The suction port 19 is formed in an L-shape when viewed from the up-down direction, and extends continuously from the front plate 12 to the right plate 16. The suction port 19 penetrates the front plate 12 and the right plate 16. In addition, a wire mesh is mounted to the suction port 19 (refer to Fig. 2). In addition, an opening 80 that allows the inside and the outside of the casing 10 to communicate with each other is provided in a lower portion of the casing 10.

### (Opening)

The opening 80 allows a pipe P or a wire W of the accommodated object in the casing 10 to be drawn out of the casing 10. The opening 80 is provided across the back plate 11 and the lower plate 13 of the casing 10. In addition, the opening 80 is provided on the right side of the casing 10. The opening 80 extends in the left-right direction. That is, a longitudinal direction of the opening 80 coincides with the left-right direction.

In addition, in each of the drawings, only one pipe P and one wire W are schematically shown. The number of the pipes P and the wires W can be appropriately changed.

The opening 80 has a back opening 81 located on the back plate 11 side and a lower opening 82 located on the lower plate 13 side and connected to a lower end of the back opening 81, and is formed in an L-shape when viewed from the left-right direction. Both the back opening 81 and the lower opening 82 are formed in a rectangular shape of which a longitudinal direction is the left-right direction when viewed from a penetration direction. The lower opening 82 is smaller than the back opening 81.

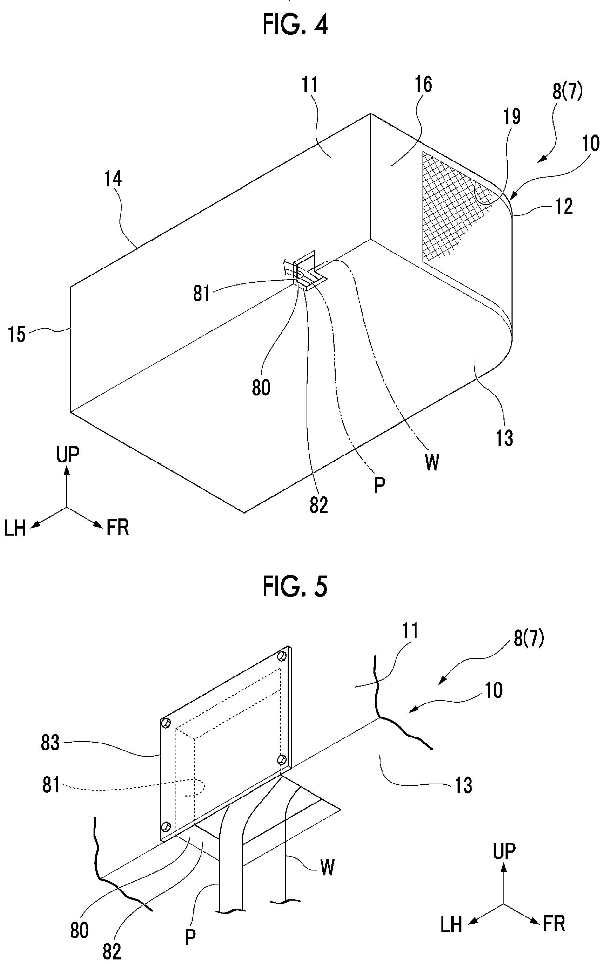

The pipe P and the wire W are drawn out from any one of the back opening 81 and the lower opening 82. As shown in Fig. 5, one of the back opening 81 and the lower opening 82, which is not used for drawing out the pipe P and the wire W, is closed by the decorative board 83.

### (Decorative Board)

The decorative board 83 is formed in a thin plate shape larger than the back opening 81 and the lower opening 82. The decorative board 83 is disposed to cover the opening 80 from the outside of the casing 10. The decorative board 83 is, for example, fastened and fixed to the casing 10 by bolts.

As shown in Fig. 3, the casing 10 described above accommodates the accumulator 53, the compressor 51, the receiver 54, the electrical component box 20, the outdoor heat exchanger 52, and the fan 40. More specifically, the accumulator 53, the compressor 51, and the receiver 54 are provided in a space on the right side in the casing 10. The electrical component box 20 is provided in a space on the left side in the casing 10. In addition, the outdoor heat exchanger 52 is provided at a position facing the suction port 19 in the casing 10, and the fan 40 is provided at a position facing the discharge port 14a in the casing 10.

### (Electrical Component Box)

A space capable of accommodating various devices is formed inside the electrical component box 20. The electrical components (not shown) such as a power supply such as an inverter or a converter, and a power drive system component are accommodated in the electrical component box 20. The electrical component box 20 is provided on the left side from the opening 80 of the casing 10.

The electrical component box 20 is formed in a cubic shape. The electrical component box 20 is fixed to the casing 10 by a fixing member (not shown) in a state in which a back surface and a lower surface thereof are separated from the back plate 11 and the lower plate 13 of the casing 10, respectively. An upper surface of the electrical component box 20 is separated downward from the upper plate 14 of the casing 10 toward the front.

### (Compressor)

The compressor 51 is provided on the left side from the opening 80 of the casing 10 and on the right side from the electrical component box 20. That is, a position of the opening 80 of the casing 10 in the left-right direction is different from those of the compressor 51 and the electrical component box 20. The compressor 51 is disposed to extend in the up-down direction.

### (Outdoor Heat Exchanger)

The outdoor heat exchanger 52 is provided between the electrical component box 20 and the suction port 19. The outdoor heat exchanger 52 is formed in the same shape as the suction port 19 when viewed from the up-down direction. The outdoor heat exchanger 52 is formed in, for example, an L-shape when viewed from the up-down direction. The outdoor heat exchanger 52 exchanges heat between the air introduced from the suction port 19 and the refrigerant flowing through the cooling cycle 50.

### (Fan)

The fan 40 is provided one by one at positions facing the two discharge ports 14a of the casing 10 so that two fans 40 are provided in total. An axial direction of the fan 40 coincides with the up-down direction.

When the fan 40 is operated, the air outside the casing 10 is introduced into the casing 10 from the suction port 19. In this manner, the air is supplied to the outdoor heat exchanger 52. The air that has exchanged heat with the refrigerant in the outdoor heat exchanger 52 passes through the fan 40 and the discharge port 14a and is discharged to the outside of the casing 10.

### (Operations and Effects)

In the transport refrigeration unit 7 described above, the casing 10 of the refrigeration unit body 8 is attached by the following procedure.

As shown in Fig. 1, a case where the casing 10 is attached to the front wall 5a of the trailer body 5 will be described.

First, the pipe P and the wire W in the casing 10 are drawn out of the outside of the casing 10 through the lower opening 82 of the opening 80. Subsequently, the decorative board 83 is attached to the back plate 11 from the outside of the casing 10 to close the back opening 81 of the opening 80 (refer to Fig. 5).

Thereafter, the back plate 11 of the casing 10 is fixed to the front wall 5a of the trailer body 5. The pipe P and the wire W drawn out from the inside of the casing 10 are connected to a pipe and a wire (not shown) inside the trailer body 5.

In this way, the casing 10 is attached.

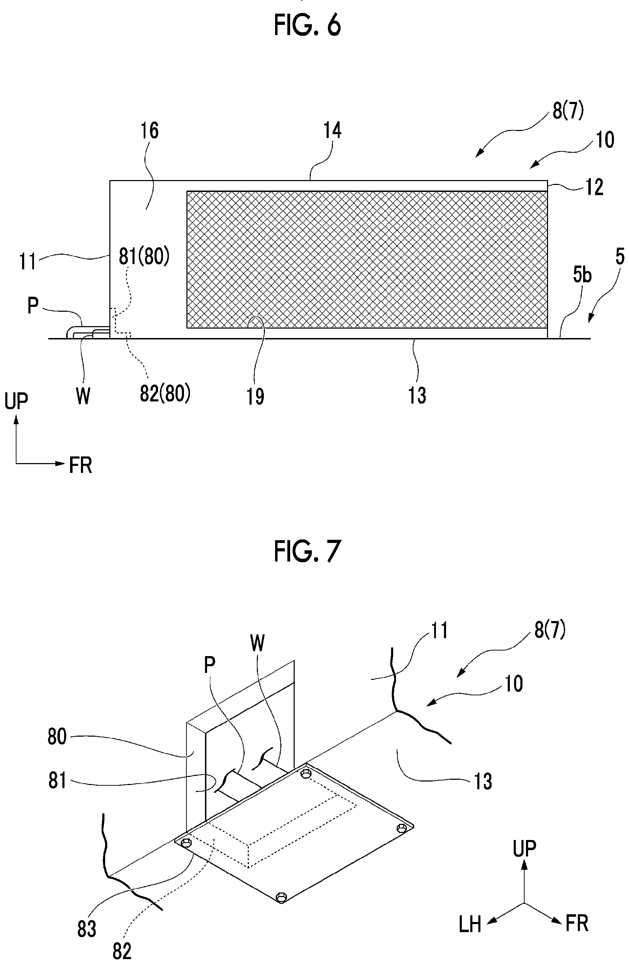

In addition, as shown in Fig. 6, the casing 10 may be attached to the ceiling wall 5b of the trailer body 5. In this case, the pipe P and the wire W are drawn out through the back opening 81 of the opening 80, and the lower plate 13 of the casing 10 is fixed to the ceiling wall 5b of the trailer body 5.

In this case, as shown in Fig. 7, the lower opening 82 of the opening 80 is closed by the decorative board 83.

In the present embodiment, the casing 10 is provided with the opening 80 that is provided across the back plate 11 and the lower plate 13, that allows the inside and the outside of the casing 10 to communicate with each other, and that allows the pipe P and the wiring W to be drawn out. The opening 80 includes the back opening 81 located on the back plate 11 side and the lower opening 82 located on the lower plate 13 side and communicating with the lower end of the back opening 81.

Accordingly, the pipe P and the wire W can be drawn out of the casing 10 from both the back plate 11 and the lower plate 13 of the casing 10 by one opening 80. Therefore, it is possible to select whether to attach the casing 10 to the front wall 5a of the trailer body 5 (refer to Fig. 1) or to attach the casing 10 to the ceiling wall 5b of the trailer body 5 (refer to Fig. 6) without changing the posture of the casing 10. In addition, in a case where the casing 10 is attached to the front wall 5a of the trailer body 5, it is possible to select whether to dispose the casing 10 in a horizontal direction or to dispose the casing 10 in a vertical direction. Similarly, even in a case where the casing 10 is attached to the ceiling wall 5b of the trailer body 5, it is possible to select the attachment posture of the casing 10 as in a case where the casing 10 is attached to the front wall 5a. Therefore, for example, the degree of freedom in attachment can be improved as compared with a case where openings for drawing out the pipe P and the wiring W are separately formed in the back plate 11 and the lower plate 13 of the casing 10.

In addition, since the back opening 81 and the lower opening 82 communicate with each other, the back opening 81 and the lower opening 82 can be formed in one process. Therefore, a manufacturing process of the casing 10 can be simplified. That is, a manufacturing process of the transport refrigeration unit 7 can be simplified.

In the present embodiment, the decorative board 83 that closes any one of the back opening 81 and the lower opening 82 is further provided.

Accordingly, one of the back opening 81 and the lower opening 82, which is not used for drawing out the pipe P or the wire W, can be closed by the decorative board 83. Therefore, it is possible to prevent the outside air from flowing into the casing 10 through the opening 80.

In addition, since an attachment area of the casing 10 can be increased by the decorative board 83, an attachment stability of the casing 10 can be improved.

In addition, the inside of the casing 10 can be prevented from being visible from the outside by the decorative board 83. Therefore, designability can be improved.

In the present embodiment, the position of the opening 80 in the left-right direction is different from those of the electrical component box 20 and the compressor 51.

Accordingly, in the casing 10, the opening 80 can be formed at a position separated from a position where a load of a heavy object such as the electrical component box 20 or the compressor 51 is applied. Therefore, an attachment strength of the casing 10 can be improved.

In the present embodiment, the longitudinal direction of the opening 80 coincides with the left-right direction.

Accordingly, it is possible to prevent the opening 80 from lengthening in the up-down direction while securing the size of the opening 80 necessary for drawing out the pipe P and the wire W. Therefore, in a case where the casing 10 is attached at the back plate 11, the attachment strength of the casing 10 can be improved.

In addition, the casing 10 can be easily formed to be thin in the up-down direction while maintaining the attachment strength of the casing 10 at the back plate 11. Therefore, it is possible to form the casing 10 so as to reduce air resistance received by the casing 10 when the refrigerated vehicle 1 runs.

In the present embodiment, the lower opening 82 is smaller than the back opening 81.

Accordingly, the size of the lower opening 82 can be reduced while securing the size of the opening 80 necessary for drawing out the pipe P or the wire W. Therefore, the strength of the lower plate 13 of the casing 10 where a load of the accommodated object in the casing 10 is directly applied can be improved.

### (Other Embodiments)

The embodiment of the present disclosure has been described in detail with reference to the drawings hereinbefore. However, the specific configuration is not limited to the embodiment, and includes design changes and the like within a scope not departing from the gist of the present disclosure.

In the above embodiment, a case where the pipe P and the wire W are drawn out from the opening 80 of the casing 10 has been described. However, the present disclosure is not limited thereto. Any one of the pipe P and the wire W may be drawn out from the opening 80.

In the above embodiment, the decorative board 83 is fixed to the casing 10 by bolts. However, the present disclosure is not limited thereto. The decorative board 83 may be fitted to the opening 80 to close the opening 80. In addition, for example, the decorative board 83 may be attached by a hinge such that the opening 80 is openable and closable.

### <Additional Notes>

The transport refrigeration unit 7 described in each embodiment is understood, for example, as follows.

(1) A transport refrigeration unit 7 according to a first aspect includes a casing 10 that includes a back plate 11 attachable to a trailer 3, and a lower plate 13 extending forward from a lower end of the back plate 11 and attachable to the trailer 3, and that is capable of storing various devices therein, in which an opening 80 provided across the back plate 11 and the lower plate 13 is formed in the casing 10, and the opening 80 allows an inside and an outside of the casing 10 to communicate with each other and allows at least one of a pipe P and a wire W to be drawn out of the casing 10, and the opening 80 includes a back opening 81 located on a back plate 11 side and a lower opening 82 located on a lower plate 13 side and connected to a lower end of the back opening 81.

Accordingly, the pipe P or the wire W can be drawn out of the casing 10 from both the back plate 11 and the lower plate 13 of the casing 10 by one opening 80.

(2) The transport refrigeration unit 7 according to a second aspect is the transport refrigeration unit 7 of (1), which may further include a decorative board 83 that closes any one of the back opening 81 and the lower opening 82.

Accordingly, one of the back opening 81 and the lower opening 82, which is not used for drawing out the pipe P or the wire W, can be closed by the decorative board 83.

(3) The transport refrigeration unit 7 according to a third aspect is the transport refrigeration unit 7 of (1) or (2), which may further include an electrical component box 20 that is provided in the casing 10 and that accommodates electrical components; and a compressor 51 that is provided in the casing 10, in which a position of the opening 80 in a left-right direction may be different from those of the electrical component box 20 and the compressor 51.

Accordingly, in the casing 10, the opening 80 can be formed at a position separated from a position where a load of a heavy object such as the electrical component box 20 or the compressor 51 is applied.

(4) The transport refrigeration unit 7 according to a fourth aspect is the transport refrigeration unit 7 according to any one of (1) to (3), in which a longitudinal direction of the opening 80 may coincide with a left-right direction.

Accordingly, it is possible to prevent the opening 80 from lengthening in the up-down direction while securing the size of the opening 80 necessary for drawing out the pipe P or the wire W.

(5) The transport refrigeration unit 7 according to a fifth aspect is the transport refrigeration unit 7 according to any one of (1) to (4), in which the lower opening 82 may be smaller than the back opening 81.

Accordingly, the size of the lower opening 82 can be reduced while securing the size of the opening 80 necessary for drawing out the pipe P or the wire W.

### Industrial Applicability

The present disclosure relates to a transport refrigeration unit. According to the present disclosure, the degree of freedom in attachment can be improved.

### Reference Signs List

- 1:: refrigerated vehicle
- 2:: tractor
- 3:: trailer
- 4:: cab
- 5:: trailer body
- 5a:: front wall
- 5b:: ceiling wall
- 5c:: left wall
- 5d:: right wall
- 6:: chassis
- 7:: transport refrigeration unit
- 8:: refrigeration unit body
- 9:: indoor unit
- 10:: casing
- 11:: back plate
- 12:: front plate
- 13:: lower plate
- 14:: upper plate
- 14a:: discharge port
- 15:: left plate
- 16:: right plate
- 19:: suction port
- 20:: electrical component box
- 40:: fan
- 50:: cooling cycle
- 51:: compressor
- 52:: outdoor heat exchanger
- 53:: accumulator
- 54:: receiver
- 55:: expansion valve
- 56:: indoor heat exchanger
- 57:: indoor fan
- 80:: opening
- 81:: back opening
- 82:: lower opening
- 83:: decorative board
- P:: pipe
- W:: wire

## Claims

1. A transport refrigeration unit comprising:
a casing that includes a back plate attachable to a trailer, and a lower plate extending forward from a lower end of the back plate and attachable to the trailer, and that is capable of storing various devices therein,
wherein an opening provided across the back plate and the lower plate is formed in the casing, and the opening allows an inside and an outside of the casing to communicate with each other and allows at least one of a pipe and a wire to be drawn out of the casing, and
the opening includes a back opening located on a back plate side and a lower opening located on a lower plate side and connected to a lower end of the back opening.

2. The transport refrigeration unit according to Claim 1, further comprising a decorative board that closes any one of the back opening and the lower opening.

3. The transport refrigeration unit according to Claim 1 or 2, further comprising:
an electrical component box that is provided in the casing and that accommodates electrical components; and
a compressor that is provided in the casing,
wherein a position of the opening in a left-right direction is different from those of the electrical component box and the compressor.

4. The transport refrigeration unit according to any one of Claims 1 to 3,
wherein a longitudinal direction of the opening coincides with a left-right direction.

5. The transport refrigeration unit according to any one of Claims 1 to 4,
wherein the lower opening is smaller than the back opening.
